# EUROPEAN PATENT SPECIFICATION

(11) **EP 3 916 310 B1**
(45) Date of publication and mention of the grant of the patent: **26.07.2023**
(21) Application number: 19919803.7
(22) Date of filing: 29.09.2019
(51) Int. Cl.: F24D 19/02, F24D 13/02, F24H 3/04, F24H 9/06

(54) **HOUSING STRUCTURE AND ELECTRIC HEATER PROVIDED WITH SAME**
GEHÄUSESTRUKTUR UND DAMIT VERSEHENE ELEKTRISCHE HEIZVORRICHTUNG
STRUCTURE DE BOÎTIER ET DISPOSITIF DE CHAUFFAGE ELECTRIQUE POURVU DE CELLE-CI

(30) Priority: 20.03.2019 CN 201910214062
(43) Date of publication of application: 01.12.2021
(73) Proprietor: Gree Electric Appliances, Inc. of Zhuhai, Zhuhai, Guangdong 519070 (CN)
(72) Inventor: XIE, Ruiliang, Zhuhai, Guangdong 519070 (CN)
(74) Representative: Murgitroyd & Company
(86) International application number: PCT/CN2019/109193
(87) International publication number: WO 2020/186724

(56) References cited:
- WO-A1-2015/164974
- CN-A- 107 616 621
- CN-U- 203 533 674
- CN-U- 203 533 675
- CN-U- 206 817 591
- US-A1- 2011 220 637

## Description

### TECHNICAL FIELD

The present application relates to the field of heating equipment technologies, in particular to a housing structure and an electric heater with the same.

### BACKGROUND

An electric heater has been widely used in places of a home, a hotel, etc., and especially in a south place where it is humid and cold in winter and there is no central heating, due to its advantages such as portability, ease of use, etc. And the electric heater may also be moved when in use, which is convenient for users to use.

A traditional electric heater includes fixed and mobile structures, a rubber wheel and a supporting foot of which are fixed at the bottom. The supporting foot is fixed at the bottom of a product by multiple screws or snap-fits to achieve fixation of the product. This fixing method requires the users to install it by themselves, which makes the disassembly and assembly inconvenient, and the supporting foot is prone to breakage and slippage when the supporting foot is disassembled and assembled many times, resulting in poor reliability of the use of the product, resulting in problems that the product cannot be used normally and the user experience of the product is affected. At present, a folding supporting foot in the market is limited by a width of a whole machine, and in order to ensure that a length of the supporting foot meets test requirements of a ramp, a half-folding method is basically adopted, and therefore complete folding cannot be achieved, and it cannot be effectively fixed after folding, bringing a lot of inconvenience to the users for storage and use.

CN 206817591 U discloses a folding caster that includes a base, a caster assembly and an elastic member. The caster assembly is rotatably mounted on the base between an unfolded position and a folded position. The elastic member is connected to the base and the caster assembly, and the elastic member provides an elastic force for pushing the caster assembly from the folded position to the unfolded position.

CN 203533675 U discloses an electric heater with rotatable and retractable support feet, and the electric heater includes a machine body, and support foot assemblies located at both ends below the machine body for supporting the machine body. The support foot assembly includes a front support foot and a rear support foot. The lower end of the machine body is provided with a front bottom rotating shaft and a rear bottom rotating shaft. The front support foot and the rear support foot are fixed below the machine body through the front bottom rotating shaft and the rear bottom rotating shaft, respectively. When the support foot assembly is unfolded, the included angle between the front support foot and the rear support foot is 180 degrees. When the support foot assembly is folded, the included angle between the front support foot and the rear support foot is 0 degrees.

WO2015164974A1 discloses an article of luggage may include an outer shell having at least a first wheel housing. At least a first wheel support may be proximate the first wheel housing and may have an upper portion that is coupled to the outer shell by a first coupling, and a lower portion that is movably coupled to the upper portion by a second coupling. At least a first wheel may be coupled to the lower portion and may be rotatable about a rotation axis. At least one of the first and second couplings may allow the wheel to pivot relative to the outer shell about a pivot axis. The first wheel may be pivotable between a deployed position in which, the first wheel rolling supports the article of luggage on a surface, and a stowed position, in which the first wheel is at least partially received within the first wheel housing.

CN107616621A discloses a multifunctional table. The multifunctional table includes a supporting panel, two supporting feet arranged at the bottom of the supporting panel, a push rod arranged on the supporting panel, four casters arranged at the bottom of the supporting panel, and a handle which is convenient to carry after the supporting panel is folded. The supporting panel not only plays a load-bearing role, but also provides a push rod storage space for storing the push rod, a handle storage space for storing the handle, a caster storage space for storing the casters, a supporting foot storage space for storing the supporting feet, and a clamping hole plug accommodating space for accommodating the clamping hole plug.

### SUMMARY

Purposes of the present application are to provide a housing structure and an electric heater with the same to solve a problem that the reliability of the use of the electric heater is poor.

In order to achieve the above purposes, according to an embodiment of the present application, a housing structure is provided, including: a housing; a rotating mechanism connected to the housing; and a supporting foot connected to the housing by a rotating shaft of the rotating mechanism, the supporting foot having a working position for rotating relative to the housing, and the supporting foot having a storage position to which the supporting foot gradually rotates from the working position toward the housing. When the supporting foot is located in the working position or the storage position, an included angle between a geometric central line in a length direction of the supporting foot and an axis of the rotating shaft is β, and 0 < β < 90°. The axis of the rotating shaft is parallel to a plane where a bottom surface of the housing is located. When the supporting foot is located in the working position, the geometric central line in the length direction of the supporting foot is perpendicular to a geometric central line in a longitudinal direction of a bottom of the housing.

Further, when the supporting foot is located in the storage position, the geometric central line in the length direction of the supporting foot is parallel to the geometric central line in the longitudinal direction of the bottom of the housing, or when the supporting foot is located in the storage position, there is an included angle between the geometric central line in the length direction of the supporting foot and the geometric central line in the longitudinal direction of bottom of the housing.

Further, the housing structure further includes a fixing seat, the fixing seat is provided at the bottom of the housing, the housing structure further includes a retaining member, and the retaining member is used for locking the fixing seat to the housing.

Further, the rotating shaft is provided on the supporting foot, and the rotating shaft is disposed integrally with the supporting foot.

Further, the housing structure further includes a fixing seat, the fixing seat is provided at the bottom of the housing, the rotating shaft is provided on the fixing seat, and the rotating shaft is disposed integrally with the fixing seat.

Further, the housing structure further includes a fixing seat, the fixing seat is provided at the bottom of the housing, a plurality of supporting surfaces are provided on a surface of one end of the supporting foot close to the rotating shaft, and when the
supporting foot is located in the working position, at least one of the plurality of supporting surfaces is abutted against the bottom of the housing.

Further, when the supporting foot is located in the working position, at least one of the plurality of supporting surfaces is abutted against the fixing seat.

Further, the housing structure further includes an air inlet grille, and when the supporting foot is located in the working position, at least one of the plurality of supporting surfaces is abutted against the air inlet grille.

Further, there is an included angle between planes where at least two of the plurality of supporting surfaces are located.

Further, there are a plurality of the supporting feet, and each of the plurality of the supporting feet is correspondingly provided with one rotating mechanism.

Further, the plurality of the supporting feet are symmetrically provided on the geometric central line in the longitudinal direction of the bottom of the housing.

According to an embodiment of the present application, an electric heater with the same is provided, including: a housing structure, the housing structure is as described in the above embodiments.

According to the housing structure provided by embodiments of the present application, the housing structure is convenient to use. Since the supporting foot is set to have the included angle β with the axis of the rotating shaft, the breakage of the supporting foot can be effectively avoided, and the service life of the housing structure is prolonged.

### BRIEF DESCRIPTION OF DRAWINGS

The drawings of the specification, forming a part of the present application, are used to provide a further understanding of the present application, the exemplary embodiments of the present application and their descriptions are used to explain the present application, and are not used to limit the scope of the present application. In the drawings:
FIG. 1 shows a schematic structural diagram of a housing structure according to an embodiment of the present application;
FIG. 2 shows a schematic structural diagram of a supporting foot of a housing structure located in a working position and a storage position according to an embodiment of the present application;
FIG. 3 shows a schematic structural diagram of a supporting foot of a housing structure located in a working position according to an embodiment of the present application; and
FIG. 4 shows a schematic structural diagram of a supporting foot of a housing structure located in a storage position according to an embodiment of the present application.

The above drawings include the following reference signs:
housing 10;
rotating mechanism 20; rotating shaft 21;
supporting foot 30; and
fixing seat 40.

### DETAILED DESCRIPTION OF THE EMBODIMENTS

It should be noted that embodiments of the present application and features of the embodiments may be combined with each other without conflict. The present application will be described below with reference to the drawings and in conjunction with the embodiments.

It should be noted that terms used herein are only for describing specific embodiments, and are not intended to limit the exemplary embodiments according to the present application. As used herein, unless otherwise clearly indicated by the context, a singular form is also intended to include a plural form. In addition, it should also be appreciated that when terms "comprising" and/or "including" are used in the specification, it is indicated that there are features, steps, operations, devices, components, and/or combinations thereof.

It should be noted that terms "first", "second", etc., in the specification, claims and above drawings of the present application are used to distinguish similar objects, and are not necessarily used to describe a specific order or sequential order. It should be understood that the terms used in this way may be interchanged under appropriate conditions, so that the embodiments of the present application described herein can be, for example, implemented in an order other than those illustrated or described herein. In addition, terms "including" and "having" and any variations thereof are intended to cover non-exclusive inclusions, such as processes, methods, systems, products, or devices that include a series of steps or units do not need to clearly list those steps or units, but may include other steps or units not clearly listed or inherent to these processes, methods, products, or devices.

For convenience of description, spatial relative terms, such as "on...... ", "above......", "on an upper surface of ......", "upper", etc., may be used herein to describe a spatial position relationship between a device or feature with other devices or features shown in the drawings. It may be appreciated that the spatial relative terms are intended to contain different orientations in usage or operation in addition to orientations of the device described in the drawings. For example, if a device in the drawings is inverted, the device described as "above another device or structure" or "on another device or structure" may then be located as "below another device or structure" or "below another device or structure". Thus, the exemplary terms "above......" may include both "above......." and "below......" orientations. The device may also be located in other different modes (rotated by 90 degrees or located in other orientations), and the spatial relative description used herein are explained accordingly.

Now, the exemplary embodiments according to the present application may be described in more detail with reference to the drawings. However, the exemplary embodiments may be implemented in a variety of different forms, and should not be explain as being limited to the embodiments set forth herein. It should be understood that the embodiments are provided to make the disclosure of the present application thorough and complete, and the concept of the exemplary embodiments are fully conveyed to those skilled in the art. In the drawings, for the sake of clarity, it is possible to enlarge thicknesses of layers and regions, and to use the same reference numerals to denote the same devices, so the description of them will be omitted.

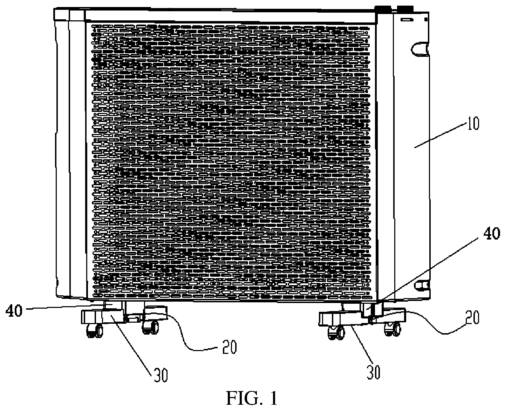

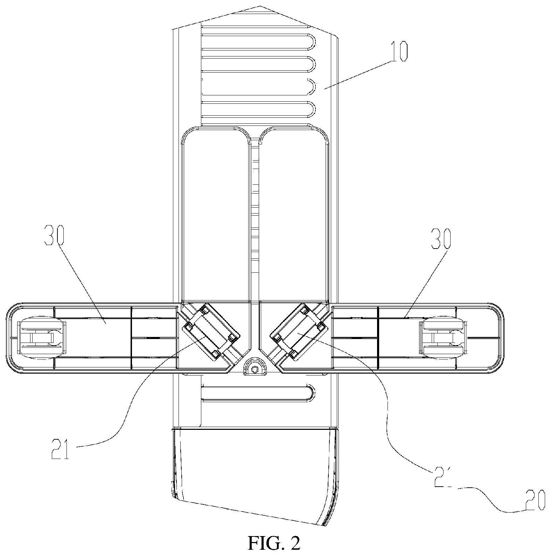

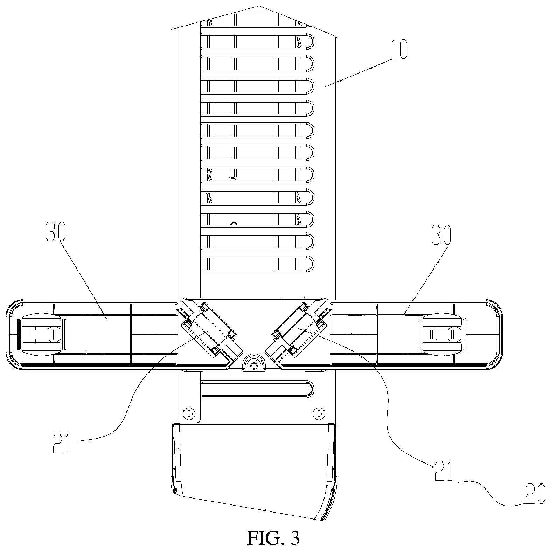

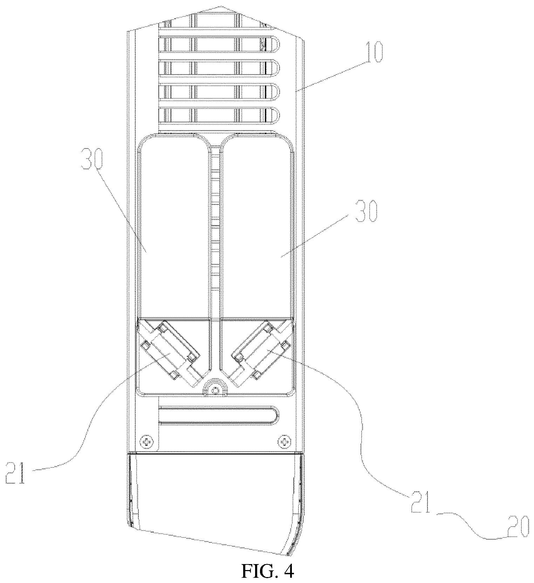

As shown in FIG. 1 to FIG. 4, the embodiments of the present application provide a housing structure.

Specifically, the housing structure includes a housing (10), a rotating mechanism (20) and a supporting foot (30). The rotating mechanism (20) is connected to the housing (10). The supporting foot (30) is connected to the housing (10) by a rotating shaft (21) of the rotating mechanism (20), the supporting foot (30) has a working position for rotating relative to the housing (10), and the supporting foot (30) has a storage position to which the supporting foot gradually rotates from the working position toward the housing (10). When the supporting foot (30) is located in the working position or the storage position, an included angle between a geometric central line in a length direction of the supporting foot (30) and an axis of the rotating shaft (21) is β, and 0 < β < 90°.

In this embodiment, the housing structure is convenient to use. Since the supporting foot is set to have the included angle β with the axis of the rotating shaft, the breakage of the supporting foot can be effectively avoided, and the service life of the housing structure is prolonged.

When the supporting foot (30) is located in the working position, the geometric central line in the length direction of the supporting foot (30) is perpendicular to a geometric central line in a longitudinal direction of a bottom of the housing (10), when the supporting foot (30) is located in the storage position, the geometric central line in the length direction of the supporting foot (30) is parallel to the geometric central line in the longitudinal direction of the bottom of the housing (10), or when the supporting foot (30) is located in the storage position, there is an included angle between the geometric central line in the length direction of the supporting foot (30) and the geometric central line in the longitudinal direction of the bottom of the housing (10), which can effectively improve the practicability and reliability of the housing structure.

The housing structure further includes a fixing seat (40). The fixing seat (40) is provided at a bottom of the housing (10), the rotating mechanism (20) further includes an avoidance groove, one of the rotating shaft (21) and the avoidance groove is provided on the fixing seat (40), and another one of the rotating shaft (21) and the avoidance groove is provided on the supporting foot (30), and a shaft hole, matched with the rotating shaft (21), is provided on a side wall of the avoidance groove. The design of the fixing seat (40) can improve the stability of the housing structure, and the design of the avoidance groove can make the supporting foot rotate more smoothly, so that the supporting foot does not interfere with other parts of the housing structure.

The housing structure further includes a retaining member, and the retaining member is used for locking the fixing seat (40) to the housing (10). The retaining member may be a screw or a snap-fit.

The rotating shaft (21) is provided on the supporting foot (30), and the rotating shaft (21) is disposed integrally with the supporting foot (30), which can improve the strength of the supporting foot.

Of course, the rotating shaft (21) may also be provided on the fixing seat (40), and the rotating shaft (21) is disposed integrally with the fixing seat (40), which can improve the connection stability of the rotating shaft.

The axis of the rotating shaft (21) is parallel to a plane where a bottom surface of the housing (10) is located, which can reduce the stress of the supporting foot during the rotation support.

Further, a plurality of supporting surfaces are provided on a surface of one end of the supporting foot (30) close to the rotating shaft (21), and when the supporting foot (30) is located in the working position, at least one of the plurality of supporting surfaces is abutted against the bottom of the housing (10), which can improve the stability of the housing structure. Of course, when the supporting foot (30) is located in the working position, the at least one of the plurality of supporting surfaces is abutted against the fixing seat (40).

The housing structure further includes an air inlet grille, and when the supporting foot (30) is located in the working position, the at least one of the plurality of supporting surfaces is abutted against the air inlet grille, which can further improve the stability of the housing structure.

There is an included angle between planes where at least two of the plurality of supporting surfaces are located, which can support the housing structure on different planes and further improve the stability of the housing structure.

There are a plurality of the supporting feet (30), and each of the plurality of the supporting feet (30) is correspondingly provided with one rotating mechanism (20). The plurality of the supporting feet (30) are symmetrically provided on a geometric central line in the longitudinal direction of a bottom of the housing (10). As shown in FIG. 1 to FIG. 5, there are two supporting feet.

The housing structure in the above embodiments can also be used in the field of electric heater equipment technologies. According to another aspect of the present application, an electric heater is provided, which includes: a housing structure, the housing structure is as described in the above embodiments.

Specifically, in order to solve the problems of the electric heater in the prior art, the present application provides an electric heater product with a hidden folding support foot. A rotating folding mechanism is provided on a supporting foot and an air inlet grille or a fixing seat of the electric heater, so as to strengthen the reliability of the disassembly and assembly structure of the supporting foot and the use of the supporting foot and to solve the problems of the disassembly and assembly defects of the supporting foot of the traditional electric heater proposed in the background. Thus, a cost of using the product is reduced, the quality reliability of the product is strengthened, and the user experience is improved. The folding and hiding of the supporting foot is realized by the rotating mechanism of an assembly structure of the supporting foot, so as to solve the problems of inconvenient disassembly and assembly of the supporting foot and enhance the reliability and convenience of the supporting foot.

A rotating shaft or an avoidance groove is designed on a surface of one end of the supporting foot, and there is an included angle between the supporting foot and one of the rotating shaft and the avoidance groove in an axial direction, which is convenient for the supporting foot to rotate for retracting or unfolding. The avoidance groove or the rotating shaft is designed on a bottom surface of the fixing seat, and there is an included angle between a housing and one of the avoidance groove and the rotating shaft in the axial direction, which is convenient for the supporting foot to rotate for retracting and unfolding. The rotating shaft or the avoidance groove of the supporting foot is fixed to the avoidance groove or the rotating shaft of the fixing seat in an articulated manner such as a screw, a snap-fit, etc., when unfolding or folding, the supporting foot rotates with the rotating shaft and the avoidance groove as a rotation axis, and an included angle is formed after the supporting foot is folded and unfolded.

A supporting surface of the supporting foot and the fixing seat is designed, when the supporting foot is opened, the supporting surface of the supporting foot is abutted against the supporting surface of the air inlet grille or the fixing seat, which increases the reliability of the use of the supporting foot.

Specifically, the electric heater includes the supporting foot, the fixing seat and other components, and the assembly method is as follows.

The rotating shaft or the avoidance groove is designed on the surface of one end of the supporting foot, a gap is designed on the rotating shaft or the avoidance groove to facilitate the fixing of the supporting foot and the fixing seat, there is an included angle between the supporting foot and one of the avoidance groove and the rotating shaft in the axial direction, and a central axis is parallel to a bottom surface of the housing.

The avoidance groove or the rotating shaft is designed on the bottom surface of the fixing seat, the gap is designed on the avoidance groove or the rotating shaft to facilitate the fixing of the supporting foot and the fixing seat, there is an included angle between the housing and one of the avoidance groove and the rotating shaft in the axial direction, and the central axis is relatively parallel to the bottom surface of the housing.

The rotating shaft or the avoidance groove of the supporting foot is fixed to the rotating shaft or the avoidance groove of the fixing seat in the articulated manner such as the screw, the snap-fit, etc., when unfolding or folding, the supporting foot rotates with the rotating shaft and the avoidance groove as the rotation axis, and an included angle is formed after the supporting foot is folded and unfolded. The supporting surface of the supporting foot and the fixing seat is designed, the supporting surface of the supporting foot is opposite to the supporting surface of the fixing seat, and a plurality of supporting surfaces may be designed in different directions. After the supporting foot is opened, the supporting surface of the supporting foot is abutted against the supporting surface of the air inlet grille or the fixing seat, which increases the reliability of the use of the supporting foot.

Two states of using or storing the supporting foot are an unfolded state and a folded state. After opening, the supporting foot is within a maximum length range that it can extend, which plays an effective fixed support role for a whole machine. After the supporting foot is folded, the supporting foot is within a minimum length range that it can shrink, the folded supporting foot is parallel to a direction of the housing or there is an included angle of less than 90° between the folded supporting foot and the housing , which is convenient for the product packaging and storage.

Two holes are designed on a structure of the air inlet grille, and edges are folded, so as to strengthen the assembly strength of the parts, and avoid the assembly deformation problem due to a thinner wall. In the case of use or storage, the user only need to rotate the supporting foot along the rotating shaft without disassembly and assembly, and thereby the problem of inconvenient disassembly and assembly or easy damage in disassembly and assembly caused by the screw or other articulated manners is reduced, and different from other rotation manners such as parallel rotation, the problems of improper rotation and unreliable support is solved.

In addition to the above, it should be noted that the "one embodiment", "another embodiment", "embodiment", etc. mentioned in the specification refer to at least one embodiment described in the general description of the present application including specific features, structures, or characteristics described in combination with the embodiment. In the specification, the same expressions appearing in multiple places do not necessarily refer to the same embodiment. Further, when a specific feature, a structure, or a feature is described in combination with any embodiment, it is claimed that the realization of such features, structures, or characteristic in combination with other embodiments is also within the protection scope of the present application.

In the above embodiments, the description of each embodiment has its own emphasis, and the part not described in detail of one embodiment may refer to the related descriptions of other embodiments.

The foregoing descriptions are merely the preferred embodiments of the present application, and are not intended to limit this application. For those skilled in the art, the present application may have various changes and variations. Any modification, equivalent replacement, improvement, etc. made within the spirit and principles of this application shall be included within the protection scope of this application.

## Claims

1. A housing structure, comprising: a housing (10) and a rotating mechanism (20) connected to the housing (10), wherein an axis of a rotating shaft (21) of the rotating mechanism (20) is parallel to a plane where a bottom surface of the housing (10) is located,
a supporting foot (30) connected to the housing (10) by the rotating shaft (21), the supporting foot (30) having a working position for rotating relative to the housing (10), and the supporting foot (30) having a storage position to which the supporting foot (30) gradually rotates from the working position toward the housing (10),
wherein when the supporting foot (30) is located in the working position or the storage position, an included angle between a geometric central line in a length direction of the supporting foot (30) and the axis of the rotating shaft (21) is β, and 0 < β < 90°,
**characterized in that** when the supporting foot (30) is located in the working position, the geometric central line in the length direction of the supporting foot (30) is perpendicular to a geometric central line in a longitudinal direction of a bottom of the housing (10).

2. The housing structure according to claim 1, wherein the housing structure further comprises a fixing seat (40), the fixing seat (40) is provided at the bottom of the housing (10), the housing structure further comprises a retaining member, and the retaining member is used for locking the fixing seat (40) to the housing (10).

3. The housing structure according to claim 1, wherein the housing structure further comprises a fixing seat (40), the fixing seat (40) is provided at the bottom of the housing (10), the rotating shaft (21) is provided on the supporting foot (30), and the rotating shaft (21) is disposed integrally with the supporting foot (30).

4. The housing structure according to claim 1, wherein the housing structure further comprises a fixing seat (40), the fixing seat (40) is provided at the bottom of the housing (10), the rotating shaft (21) is provided on the fixing seat (40), and the rotating shaft (21) is disposed integrally with the fixing seat (40).

5. The housing structure according to claim 1, wherein the housing structure further comprises a fixing seat (40), the fixing seat (40) is provided at the bottom of the housing (10), and a plurality of supporting surfaces are provided on a surface of one end of the supporting foot (30) close to the rotating shaft (21), and when the supporting foot (30) is located in the working position, at least one of the plurality of supporting surfaces is abutted against the bottom of the housing (10).

6. The housing structure according to claim 5, wherein when the supporting foot (30) is located in the working position, at least one of the plurality of supporting surfaces is abutted against the fixing seat (40).

7. The housing structure according to claim 5 or 6, wherein the housing structure further comprises an air inlet grille, and when the supporting foot (30) is located in the working position, at least one of the plurality of supporting surfaces is abutted against the air inlet grille.

8. The housing structure according to claim 5, wherein there is an included angle between planes where at least two of the plurality of supporting surfaces are located.

9. The housing structure according to claim 1, wherein there are a plurality of the supporting feet (30), and each of the plurality of the supporting feet (30) is correspondingly provided with one rotating mechanism (20).

10. The housing structure according to claim 9, wherein the plurality of the supporting feet (30) are symmetrically provided on the geometric central line in the longitudinal direction of the bottom of the housing (10).

11. The housing structure according to claim 1, wherein when the supporting foot (30) is located in the storage position, the geometric central line in the length direction of the supporting foot (30) is parallel to the geometric central line in the longitudinal direction of the bottom of the housing (10), or when the supporting foot (30) is located in the storage position, there is an included angle between the geometric central line in the length direction of the supporting foot (30) and the geometric central line in the longitudinal direction of the bottom of the housing (10).

12. An electric heater, **characterized by**, comprising:
a housing structure;
wherein the housing structure is as described according to any one of claims 1 to 11.

## Patentansprüche

1. Eine Gehäusestruktur, die Folgendes beinhaltet: ein Gehäuse (10) und einen rotierenden Mechanismus (20), der mit dem Gehäuse (10) verbunden ist, wobei eine Achse einer rotierenden Welle (21) des rotierenden Mechanismus (20) parallel zu einer Ebene ist, an der sich eine untere Oberfläche des Gehäuses (10) befindet,
einen Stützfuß (30), der durch die rotierende Welle (21) mit dem Gehäuse (10) verbunden ist, wobei der Stützfuß (30) eine Arbeitsposition zum Rotieren relativ zu dem Gehäuse (10) aufweist und der Stützfuß (30) eine Lagerungsposition aufweist, in die der Stützfuß (30) schrittweise von der Arbeitsposition zu dem Gehäuse (10) hin rotiert, wobei, wenn sich der Stützfuß (30) in der Arbeitsposition oder der Lagerungsposition befindet, ein eingeschlossener Winkel zwischen einer geometrischen zentralen Linie in einer Längenrichtung des Stützfußes (30) und der Achse der rotierenden Welle (21) β ist, und 0 < β < 90°,
**dadurch gekennzeichnet, dass**
wenn sich der Stützfuß (30) in der Arbeitsposition befindet, sich die geometrische zentrale Linie in der Längenrichtung des Stützfußes (30) senkrecht zu einer geometrischen zentralen Linie in einer Längsrichtung einer Unterseite des Gehäuses (10) befindet.

2. Gehäusestruktur gemäß Anspruch 1, wobei die Gehäusestruktur ferner eine Befestigungsfläche (40) beinhaltet, wobei die Befestigungsfläche (40) an der Unterseite des Gehäuses (10) bereitgestellt ist, wobei die Gehäusestruktur ferner ein Halteelement beinhaltet und das Halteelement zum Verriegeln der Befestigungsfläche (40) mit dem Gehäuse (10) verwendet wird.

3. Gehäusestruktur gemäß Anspruch 1, wobei die Gehäusestruktur ferner eine Befestigungsfläche (40) beinhaltet, wobei die Befestigungsfläche (40) an der Unterseite des Gehäuses (10) bereitgestellt ist, wobei die rotierende Welle (21) auf dem Stützfuß (30) bereitgestellt ist und die rotierende Welle (21) integral mit dem Stützfuß (30) angeordnet ist.

4. Gehäusestruktur gemäß Anspruch 1, wobei die Gehäusestruktur ferner eine Befestigungsfläche (40) beinhaltet, wobei die Befestigungsfläche (40) an der Unterseite des Gehäuses (10) bereitgestellt ist, wobei die rotierende Welle (21) auf der Befestigungsfläche (40) bereitgestellt ist und die rotierende Welle (21) integral mit der Befestigungsfläche (40) angeordnet ist.

5. Gehäusestruktur gemäß Anspruch 1, wobei die Gehäusestruktur ferner eine Befestigungsfläche (40) beinhaltet, wobei die Befestigungsfläche (40) an der Unterseite des Gehäuses (10) bereitgestellt ist und eine Vielzahl von Stützoberflächen auf einer Oberfläche eines Endes des Stützfußes (30) nahe der rotierenden Welle (21) bereitgestellt sind, und, wenn sich der Stützfuß (30) in der Arbeitsposition befindet, mindestens eine der Vielzahl von Stützoberflächen gegen die Unterseite des Gehäuses (10) stößt.

6. Gehäusestruktur gemäß Anspruch 5, wobei, wenn sich der Stützfuß (30) in der Arbeitsposition befindet, mindestens eine der Vielzahl von Stützoberflächen gegen die Befestigungsfläche (40) stößt.

7. Gehäusestruktur gemäß Anspruch 5 oder 6, wobei die Gehäusestruktur ferner ein Lüftungsgitter beinhaltet, und, wenn sich der Stützfuß (30) in der Arbeitsposition befindet, mindestens eine der Vielzahl von Stützoberflächen gegen das Lüftungsgitter stößt.

8. Gehäusestruktur gemäß Anspruch 5, wobei sich ein eingeschlossener Winkel zwischen Ebenen befindet, an denen sich mindestens zwei der Vielzahl von Stützoberflächen befinden.

9. Gehäusestruktur gemäß Anspruch 1, wobei es eine Vielzahl der Stützfüße (30) gibt und jeder der Vielzahl von Stützfüßen (30) entsprechend mit einem rotierenden Mechanismus (20) bereitgestellt ist.

10. Gehäusestruktur gemäß Anspruch 9, wobei die Vielzahl der Stützfüße (30) symmetrisch auf der geometrischen zentralen Linie in der Längsrichtung der Unterseite des Gehäuses (10) bereitgestellt sind.

11. Gehäusestruktur gemäß Anspruch 1, wobei, wenn sich der Stützfuß (30) in der Lagerungsposition befindet, sich die geometrische zentrale Linie in der Längenrichtung des Stützfußes (30) parallel zu der geometrischen zentralen Linie in der Längsrichtung der Unterseite des Gehäuses (10) befindet, oder wenn sich der Stützfuß (30) in der Lagerungsposition befindet, es einen eingeschlossenen Winkel zwischen der geometrischen zentralen Linie in der Längenrichtung des Stützfußes (30) und der geometrischen zentralen Linie in der Längsrichtung der Unterseite des Gehäuses (10) gibt.

12. Eine elektrische Heizvorrichtung, die **dadurch gekennzeichnet ist, dass** sie Folgendes beinhaltet:
eine Gehäusestruktur;
wobei die Gehäusestruktur wie gemäß einem der Ansprüche 1 bis 11 beschrieben ist.

## Revendications

1. Une structure de boîtier, comprenant : un boîtier (10) et un mécanisme de rotation (20) raccordé au boîtier (10), où un axe d'un arbre de rotation (21) du mécanisme de rotation (20) est parallèle à un plan où une surface de fond du boîtier (10) est placée, un pied de support (30) raccordé au boîtier (10) par l'arbre de rotation (21), le pied de support (30) ayant une position de travail pour effectuer une rotation relativement au boîtier (10), et le pied de support (30) ayant une position de rangement jusqu'à laquelle le pied de support (30) effectue progressivement une rotation en allant de la position de travail vers le boîtier (10),
où lorsque le pied de support (30) est placé dans la position de travail ou la position de rangement, un angle inclus entre une ligne centrale géométrique dans un sens de la longueur du pied de support (30) et l'axe de l'arbre de rotation (21) est β, et 0 < β < 90°,
**caractérisée en ce que**
lorsque le pied de support (30) est placé dans la position de travail, la ligne centrale géométrique dans le sens de la longueur du pied de support (30) est perpendiculaire à une ligne centrale géométrique dans un sens longitudinal d'un fond du boîtier (10).

2. La structure de boîtier selon la revendication 1, où la structure de boîtier comprend en sus une embase de fixation (40), l'embase de fixation (40) est fournie au fond du boîtier (10), la structure de boîtier comprend en sus un élément de retenue, et l'élément de retenue est utilisé pour verrouiller l'embase de fixation (40) sur le boîtier (10).

3. La structure de boîtier selon la revendication 1, où la structure de boîtier comprend en sus une embase de fixation (40), l'embase de fixation (40) est fournie au fond du boîtier (10), l'arbre de rotation (21) est fourni sur le pied de support (30), et l'arbre de rotation (21) est disposé de manière solidaire avec le pied de support (30).

4. La structure de boîtier selon la revendication 1, où la structure de boîtier comprend en sus une embase de fixation (40), l'embase de fixation (40) est fournie au fond du boîtier (10), l'arbre de rotation (21) est fourni sur l'embase de fixation (40), et l'arbre de rotation (21) est disposé de manière solidaire avec l'embase de fixation (40).

5. La structure de boîtier selon la revendication 1, où la structure de boîtier comprend en sus une embase de fixation (40), l'embase de fixation (40) est fournie au fond du boîtier (10), et une pluralité de surfaces de support sont fournies sur une surface d'une extrémité du pied de support (30) près de l'arbre de rotation (21), et lorsque le pied de support (30) est placé dans la position de travail, au moins une surface de la pluralité de surfaces de support est mise en aboutement contre le fond du boitier (10).

6. La structure de boîtier selon la revendication 5, où lorsque le pied de support (30) est placé dans la position de travail, au moins une surface de la pluralité de surfaces de support est mise en aboutement contre l'embase de fixation (40).

7. La structure de boîtier selon la revendication 5 ou la revendication 6, où la structure de boîtier comprend en sus une grille d'entrée d'air, et lorsque le pied de support (30) est placé dans la position de travail, au moins une surface de la pluralité de surfaces de support est mise en aboutement contre la grille d'entrée d'air.

8. La structure de boîtier selon la revendication 5, où il y a un angle inclus entre des plans où au moins deux surfaces de la pluralité de surfaces de support sont placées.

9. La structure de boîtier selon la revendication 1, où il y a une pluralité de pieds de support (30), et chaque pied de la pluralité des pieds de support (30) est pourvu de manière correspondante d'un mécanisme de rotation (20).

10. La structure de boîtier selon la revendication 9, où la pluralité des pieds de support (30) sont fournis de manière symétrique sur la ligne centrale géométrique dans le sens longitudinal du fond du boîtier (10).

11. La structure de boîtier selon la revendication 1, où lorsque le pied de support (30) est placé dans la position de rangement, la ligne centrale géométrique dans le sens de la longueur du pied de support (30) est parallèle à la ligne centrale géométrique dans le sens longitudinal du fond du boîtier (10), ou lorsque le pied de support (30) est placé dans la position de rangement, il y a un angle inclus entre la ligne centrale géométrique dans le sens de la longueur du pied de support (30) et la ligne centrale géométrique dans le sens longitudinal du fond du boîtier (10).

12. Un appareil de chauffage électrique, **caractérisé par** le fait de comprendre :
une structure de boîtier ;
où la structure de boîtier est telle que décrite selon l'une quelconque des revendications 1 à 11.
